# EUROPEAN PATENT SPECIFICATION

(11) **EP 3 402 977 B1**
(45) Date of publication and mention of the grant of the patent: **29.04.2020**
(21) Application number: 16700851.5
(22) Date of filing: 12.01.2016
(51) Int. Cl.: F02M 21/02, F02D 19/06

(54) **A FUEL GAS MANIFOLD ASSEMBLY, INTERNAL COMBUSTION PISTON ENGINE AND METHOD OF MANUFACTURING A FUEL GAS MANIFOLD ASSEMBLY**
EINE BRENNSTOFFGASVERTEILERANORDNUNG, HUBKOLBENBRENNKRAFTMASCHINE UND VERFAHREN ZUR HERSTELLUNG EINER BRENNSTOFFGASVERTEILERANORDNUNG
ENSEMBLE COLLECTEUR DE GAZ COMBUSTIBLE, MOTEUR À COMBUSTION INTERNE ET PROCÉDÉ DE FABRICATION D'UN ENSEMBLE COLLECTEUR DE GAZ COMBUSTIBLE

(43) Date of publication of application: 21.11.2018
(73) Proprietor: Wärtsilä Finland Oy, 65100 Vaasa (FI)
(72) Inventor: MÄENPÄÄ, Juho, 65100 Vaasa (FI); VIITALA, Marko, 65100 Vaasa (FI)
(74) Representative: Genip Oy
(86) International application number: PCT/FI2016/050009
(87) International publication number: WO 2017/121920

(56) References cited:
- EP-A1- 2 589 780
- WO-A1-98/10184
- CN-U- 203 809 150
- US-A1- 2002 195 088

## Description

### Technical field

The present invention relates to a fuel gas manifold assembly according to the preamble of claim 1.

The present invention relates also to an internal combustion piston engine comprising the fuel gas assembly and a method of manufacturing a fuel gas manifold assembly.

### Background art

Internal combustion engines are provided with fuel gas assembly for providing gaseous fuel to fuel injectors. The delivery of the gas in the combustion chamber may be realized such that the engine is provided with fuel admission valves to feed gaseous fuel into the intake channels of the cylinders. In the intake channels the gaseous fuel is mixed with the combustion air. Then the gaseous fuel and combustion air mixture is introduced into the cylinders wherein each cylinder is provided its own fuel admission valve.

It is known as such that the fuel rail may have a double-walled structure having an inner channel for conveying fuel and an outer channel surrounding the inner channel. For instance, WO 2012070946 A1 discloses a gas supply system for a gas engine comprising a double-walled pipe with an inner and outer pipe for the supply of the gas to the cylinder units of the engine. The double wall provides an outer, longitudinally running annular space along the whole length of the pipe and where the fuel gas is transported in the inner pipe. The double-walled pipe along the engine is divided into sections between respective cylinders where a coupling piece is arranged between the sections to link the sections. The coupling piece is internally open and comprises one or more channels to link the longitudinally running annular space between respective sections and a boring to take out the fuel gas from the inner pipe and through an outlet to a respective cylinder unit.

WO 2014076367 A1 discloses a gas feed system for a reciprocating engine. The gas feed system comprises intake ports for conducting combustion air and gaseous fuel into cylinders of the engine. The gas feed system further comprises gas feed valves for feeding gaseous fuel into the intake ports and valve housing surrounding the gas feed valves. In addition, the gas feed system comprises separate gas line portions for conducting the gaseous fuel to the gas geed valves. The gas line portions comprise an inner gas line portion for gaseous fuel and an outer gas line portion for collecting possible leaking gaseous fuel. The inner gas line portion is arranged inside the outer gas line portion.

US 2003/0070658 A1 discloses an injection module assembly including a fuel rail defining a passageway through which a fuel can flow, and a plurality of fuel injectors for delivering fuel in the passageway to a respective plurality of combustion chambers in an internal combustion engine. The fuel injectors are coupled to the fuel rail such that an interface between the fuel rail and each fuel injector is sealed to prevent leakage of both liquid fuel and hydrocarbon emissions from the interface. The injection module assembly includes an electrical connector coupled to the fuel rail and to each of the injectors for providing electrical power to each injector. The injection module assembly further includes an overmolding covering at least a portion of the fuel rail, at least a portion of the electrical connector, and at least a portion of each fuel injector. Other example of manifold assembly can be found in EP 2 589 780 A1 and US 2002/195088 A1.

An object of the invention is to provide a fuel gas manifold assembly, configured to be used in an internal combustion piston engine, in which the performance is considerably improved compared to the prior art solutions.

### Disclosure of the Invention

The objects of the invention can be met substantially as is disclosed in the independent claim and in the other claims describing more details of different embodiments of the invention.

A fuel gas manifold assembly according to the invention is configured to be used in an internal combustion piston engine. The fuel gas manifold assembly comprises a gas tight fuel gas manifold defining a longitudinal passage for fuel gas, a fuel gas inlet which is advantageous provided at one end of the manifold. The manifold assembly comprises further a number of fuel gas outlets along the longitudinal passage, and an outer enclosure surrounding the fuel gas manifold so as to provide a gas tight cover for the fuel gas manifold, and wherein an intermediate gas space is arranged between the inner fuel gas manifold and the outer enclosure. The outer enclosure is provided with a planar face wall extending from one end of the enclosure to a second end of the enclosure, the planar face wall is provided with a number of main openings along its length arranged to communicate with the fuel gas outlets of the manifold in the enclosure and there is arranged at least one auxiliary opening next to each one of the main openings in the planar wall communicating with the intermediate gas space.

According to an embodiment of the invention the planar face wall of the outer enclosure is formed of a first singular plate member. The three other walls of the outer enclosure are formed of a second singular plate member provided with two folds. The planar face wall and the three other wall are configured with each other such that the middle wall of the outer enclosure between the folds is arranged on the opposite side to the first singular plate member.

According to an embodiment of the invention the outer enclosure has a rectangular cross-section formed of planar walls, and that the inner fuel gas manifold has generally circular cross-section.

According to an embodiment of the invention the outer enclosure the fuel gas manifold has a circular cross section and its diameter is greater at its middle region than at its ends.

According to an embodiment of the invention the fuel gas manifold comprises end parts having a constant circular cross-section over a predetermined length and the diameter of the end parts is smaller than the diameter of the gas manifold between the end parts.

According to an embodiment of the invention the outer enclosure is provided with a flange member where an opening is provided and the end part of the fuel gas manifold is arranged coaxially with the opening in the flange member.

According to an embodiment of the invention the opening in the flange member of the outer enclosure has greater inner diameter than the outer diameter of the end part.

According to an embodiment of the invention the end part is arranged to extend to flush with a face plane of the flange member outer surface of the flange member of the outer enclosure.

According to an embodiment of the invention the fuel gas manifold comprises a converging section at its ends, which converging section converges towards end parts thereof.

According to an embodiment of the invention outer enclosure is provided with number of through holes. In each one of the hole a plug is provided and which plug extends into the intermediate gas space and against the inner fuel gas manifold so as to support the fuel gas manifold in the outer enclosure.

According to an embodiment of the invention the main opening in the planar face wall and the fuel gas outlet in the fuel gas manifold are gas tightly secured with each other at their rim by welding.

According to an embodiment of the invention the outer enclosure comprises flange members at its both ends and that the flange member surrounds a portion of the end parts of the of the gas manifold.

According to an embodiment of the invention the fuel gas manifold assembly comprising an a gas tight fuel gas manifold defining a longitudinal passage for fuel gas and an outer enclosure surrounding the fuel gas manifold so as to provide a gas tight cover for the fuel gas manifold, and wherein an intermediate space is arranged between the inner fuel gas manifold and the outer enclosure. The outer enclosure comprises a flange member at its longitudinal end. The flange member is used for connecting manifold assembly to a fuel source. The flange member is provided with one opening, and the fuel gas manifold is provided with an end part which is arranged in connection with the opening in the flange member such that a gap is provided radially between the end part and the flange member.

According to an embodiment of the invention the gap is an annular gap.

According to an embodiment of the invention the opening in the flange member and the end part of the fuel gas manifold are arranged coaxially in respect to each other.

According to an embodiment of the invention the end part of the fuel gas manifold is arranged to extend into the opening in the flange member.

According to an embodiment of the invention the end part of the fuel gas manifold is arranged to extend into the opening in the flange member such that the end of the end part is flush with the face plane of the flange member.

According to an embodiment of the invention the fuel gas manifold comprises a converging section which converges towards the end part and to which the end part is joined.

According to an embodiment of the invention the fuel gas manifold has a circular cross section and its diameter is greater at its middle region than the end parts.

According to an embodiment of the invention the end parts of the fuel gas manifold are connected to both ends of the fuel gas manifold by the converging section and that the diameter of end part is smaller than the diameter of the gas manifold between the end parts.

According to an embodiment of the invention the outer enclosure comprises a plurality of openings, which openings are provided with support parts arranged to extend in the intermediate space from the outer enclosure to the inner fuel gas manifold so as to connect the outer enclosure with the inner fuel gas manifold and hold still the inner fuel gas manifold, and that the support parts are welded to the outer enclosure so as to plug gas-tightly the openings.

According to an embodiment of the invention the outer enclosure comprises a longitudinal U-shaped portion fastened by welding to the longitudinal planar face wall so as to form a rectangular cross-section, and that the longitudinal U-shaped portion is provided with the plugs extending from walls of the longitudinal U-shaped portion to the inner fuel gas manifold so as to connect the outer enclosure with the inner fuel gas manifold wherein the plugs are fastened to the inner fuel gas manifold by a plug weld fastening wherein the plug weld fastening provides gas-tight fastening between the outer enclosure and the inner flue gas manifold.

According to an embodiment of the invention the plugs are formed of a longitudinal cylindrical wall and a flat bottom plate wherein plug is welded to the opening of the outer enclosure and wherein the flat plate is welded to the fuel gas manifold.

According to an embodiment of the invention the support parts are fastened to the inner fuel gas manifold by a plug weld fastening wherein the plug weld fastening provides gas-tight fastening between the outer enclosure and the inner flue gas manifold.

A method of manufacturing a fuel gas assembly configured to be used in an internal combustion piston engine, the method comprising the steps of providing a gas tight inner fuel gas manifold defining a longitudinal passage for fuel gas, providing a fuel gas inlet and a number of fuel gas outlets along the longitudinal passage of the fuel gas manifold, providing a longitudinal outer enclosure for the fuel gas manifold by arranging an enclosure to surround and extend longitudinally with fuel gas manifold, wherein dimensions of the outer enclosure are chosen so that there is an intermediate gas space between the fuel gas manifold and the outer enclosure. The method comprises further a steps of providing the outer enclosure with a planar face wall and providing a number of main openings to the face wall arranged at the fuel gas outlets of the manifold in the enclosure and arranging at least one auxiliary opening next to each one of the main openings in the planar wall communicating with the intermediate gas space.

According to an embodiment of the invention the outer enclosure is formed of plate-like walls so that the enclosure has a rectangular cross-section and the end portions of the inner manifold are provided with converging channel section, which converging channel section converges towards ends of the inner manifold.

According to an embodiment of the invention the first singular plate member is provided with required number of the main openings along its length and at least one auxiliary opening next to each one of the main opening.

Several technical benefits are obtained with the invention. The amount of needed welding is minimized and may be performed as laser welding. This in turn decreases the heat load to the product and therefore the dimensional accuracy is maintained high through the welding process.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates an internal combustion piston engine according to an embodiment of the invention,
Figure 2 illustrates a fuel gas manifold assembly configured to be used in an internal combustion piston engine according to an embodiment of the invention,
Figure 3 illustrates the cross sectional view III-III of the figure 2,
Figure 4 illustrates the flange member shown in the figure 2 in a more detailed manner, and
Figure 5 illustrates the face wall at the area of a connecting part shown in the figure 2 in a more detailed manner.

### Detailed Description of Drawings

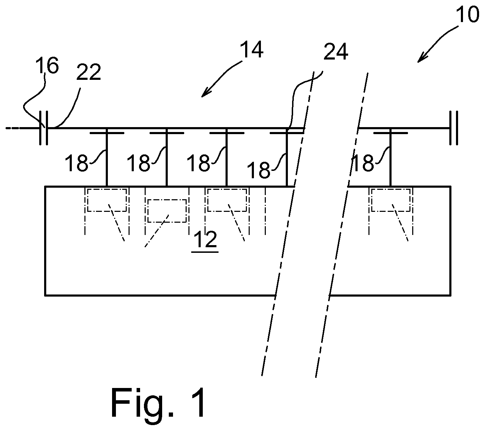

Figure 1 depicts schematically an internal combustion piston engine 10. The engine comprises a body part 12 including a block, power parts of the engine, cylinders, cylinder heads etc., i.e. the parts and constructions necessary for operation and performing the operations of the engine known as such for a skilled person in the art. The engine 10 is adapted to combust gaseous fuel. And, there is a fuel gas manifold assembly 14 arranged in connection with the internal combustion piston engine for delivering fuel gas to the cylinders of the engine. The fuel gas manifold 14 is provided with at least one coupling part 16, here arranged at its one end, for delivering gas to the cylinders and routing possible leakage gas away from the engine. There are a number of connecting parts 18 by mean of which the fuel gas manifold assembly 14 is releasably connectable to each one of the cylinders of the engine.

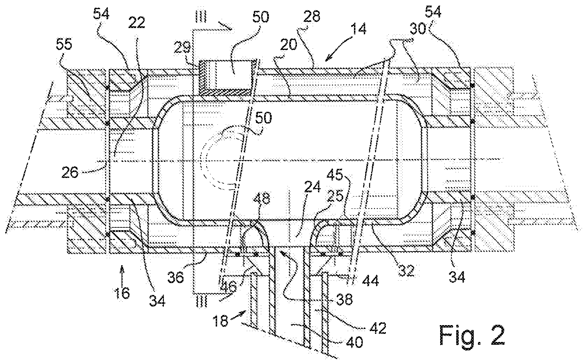

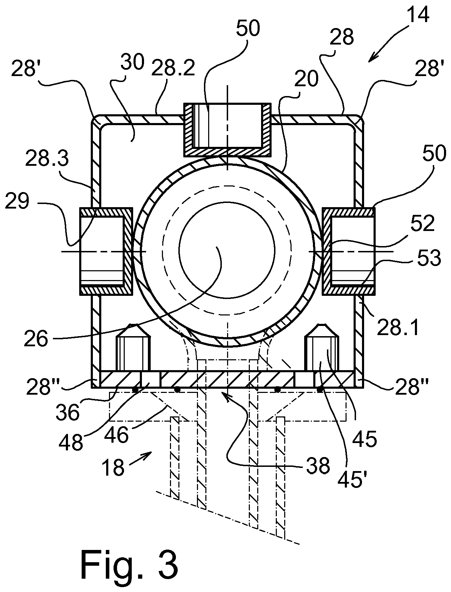

In the figure 2 there is shown a fuel gas manifold assembly 14 in a more detailed manner. In the figure 3 there is shown the cross sectional view III-III of the figure 2. The fuel gas manifold assembly is configured to be used in an internal combustion piston engine 10 as outlined in the figure 1. With the reference to the figures 1 and 2 the fuel gas manifold assembly 14 comprises a gas tight fuel gas manifold 20 defining a longitudinal passage inside the fuel gas manifold. The fuel gas may be delivered to the individual cylinders of the engine to be combusted therein. The fuel gas manifold 20 is provided with a fuel gas inlet 22 provided at an end of the manifold 20. The manifold 20 is also provided with a number of fuel gas outlets 24 along the longitudinal passage, for the fuel gas to flow from the inlet via the manifold to each cylinder of the engine. Even if there is shown only one outlet 24 in the figure 2 it is clear that there is arranged one outlet for each cylinder of the engine. The fuel gas outlets 24 are arranged in line with the central axis 26 of the manifold assembly 14. The fuel gas outlets are manufactured by providing necessary number of openings to the fuel gas manifold.

The fuel gas manifold assembly 14 further comprises an outer enclosure 28 surrounding the fuel gas manifold 20 so as to provide a gas tight cover for the fuel gas manifold 20. There is an intermediate gas space 30 arranged between the fuel gas manifold 20 and the outer enclosure 28. The intermediate space serves for collecting and further conveying any leak gas to be handled safely. The fuel gas manifold 20 is formed of a generally cylindrical body part 32 and a cylindrical end part 34 at least in the one end of the cylindrical body. However, in the figure 2 there are is shown an embodiment where both ends of the cylindrical body part 32 are provided with the end parts 34.

The outer enclosure 28 is provided with a planar face wall 36 extending from one end of the enclosure 28 to the second end of the enclosure. The planar face wall is provided with machined outer surface for coupling the connecting parts 18 thereto in a gas tight manner. This makes it possible to provide connection surface for the connecting part 18 without a need of separate flanges or a like in the outer enclosure 28.

The planar face wall 36 of the outer enclosure 28 is provided with a number of main openings 38 arranged to meet with the location of each one of the fuel gas outlets 24 of the manifold 20, such that the fuel gas outlet 24 is gas tightly connected to the main opening 38. The main opening provides the flow connection from the manifold 20 to the connecting part 18. Advantageously the main opening 38 in the planar face wall and the fuel gas outlet 24 in the fuel gas manifold are gas tightly secured with each other at their rim by welding. In this case to fuel gas outlet may be provided with an extension 25 by means of which the opening in the manifold 20 connected to the main opening 38 in the face wall 36. This way the manifold space is separated from the intermediate space 30. The extension 25 may be a separate part welded to the assembly 14, or the extension 25 may be formed by e.g. pressing with suitable tool from the base material of the manifold 20. The extension 25 also acts as a support for the fuel gas manifold 20.

The intermediate gas space 30 is arranged for safety reasons. In case of a leakage of the gas the space receives any leaked gas and conveys it away from the engine to be handled safely. The connecting part 18 is provided with a double walled conduit via which the engine is connected to the gas manifold assembly 14. In the connecting part 18 an inner conduit 40 is arranged to communicate with the fuel gas manifold 20 via the fuel gas outlet 24. There is an annular conduit 42 arranged between the inner conduit and the outer wall of the connecting part 18 which is arranged for receiving any leak gas from the engine and conveying it to the intermediate gas space 30 and away from the engine.

The connecting part 18 is provided with a flange 44 or alike by means of which the connecting part 18 is connectible with the planar face wall 36 such that the inner conduit 40 may communicate with the fuel gas manifold 20. The flange 44 is provided with a central opening through which the inner conduit 40 is in communication with the respective fuel gas outlet 24. The flange is also provided with at least one auxiliary opening 46. Now, the planar face wall 36 is also provided with at least one respective auxiliary opening 48 next to the main opening 38 in the face wall which opens a passage to the intermediate space 30. The auxiliary opening 46 in the flange and the auxiliary opening 48 in the face wall 36 form a flow path connecting the intermediate gas space 30 and the annular conduit 42 of the connecting part 18. The auxiliary opening 46 in the flange opens at its first end to the annular conduit 42 of the connecting part 18 and at its second end to a radial position which is sealed to form a flow path between the second end of the auxiliary opening 46 in the flange and the auxiliary opening 48 in the planar face wall 36. The radial position is sealed advantageously by two seals circumscribing the inner conduit 40 at different radial positions, such as o-rings. In the figures there is also shown how the planar base wall 36 is provided with a fastening bushing 45 for attaching the connecting part 18 to the planar face wall 36 (more details will be provided below). The fastening bushing is arranged inside the outer enclosure. In other words, fastening bushing 45 is arranged to the first singular part member i.e. the planar face wall 36. Here one can see that the fastening bushings 45 are arranged in the vicinity of the main openings 38.

The outer enclosure 28 is formed i.e. manufactured of substantially planar walls 28.1, 28.2, 28.3, 36 while the fuel gas manifold 20 is of circular cross-section. The planar face wall 36 is formed of a first singular plate member. The first singular plate member is provided with required number of the main openings 38 along its length and at least one auxiliary opening 48 next to each one of the main opening. The three other planar walls 28.1, 28.2, 28.3 of the outer enclosure 28 are formed of a second singular plate member, which is during the manufacturing process provided two longitudinal and parallel folds 28' such that a substantially U-shape profile is formed. The folds 28' may have chamfered corners. The properly folded first singular plate member is attached to the first singular plate member i.e. the planar face wall 36 such that the middle wall 28.2 of the outer enclosure between the folds 28' is arranged on the opposite side to the first singular plate member. The longitudinal U-shaped profile is fastened by welding to the longitudinal planar face wall so as to form the outer enclose of a rectangular cross-section. The longitudinal edges 28" of the second singular plate member are attached to the sides of the first singular plate member, i.e. the planar face wall 36. All the attachments are made gas tight. The material is advantageously steel and thus the attachments are made preferably by welding.

The fuel gas manifold 20 is supported in the outer enclosure 28 such that the manifold is firmly positioned and maintained immovable inside the enclosure 28. This is made possible by particular support parts 50 arranged to extend between the outer enclosure 28 and the gas manifold 20 such that the gas manifold 20 is supported by the support parts. This is depicted generally in the figure 2. In the cross sectional view III-III of figure 2 shown in the figure 3 one can see that the outer enclosure 28 is provided with a plurality of openings 29 in the wall, which openings are provided with support parts 50 arranged to extend in the intermediate space 30 from the outer enclosure wall to abut the inner fuel gas manifold 20. This way the inner fuel gas manifold is supported by the outer enclosure via the support parts 50.

There are several support parts 50 arranged at a longitudinal location of the assembly 14 to provide support for the manifold 20 from different directions. The support parts 50 are arranged to support the manifold at different angular positions on the plane of the cross section. There is also shown in the figure 3 how the connecting part 18 relates to the face wall 36. The face wall 36 serves as a wall to which the connecting parts 18 are coupled and its surface is machined to be plain and even enough to enable its coupling to the engine by the connecting parts 18. The connecting parts 18 are advantageously identical for each cylinder of the engine.

Advantageously the support parts 50 comprise sets of plugs 50. The plugs 50 are arranged to the walls of the second singular plate member.

The plugs 50 are welded to the wall of the outer enclosure 28 so as to close gas-tightly the openings in the walls with the plugs 50. The plugs 50 are of cup-like structure and they are also preferably welded to the manifold 20 structure at a bottom plate 52 of the plug.

The outer enclosure 28 is of rectangular cross-section. However, if the cross-section is square, as is shown in figure 3, the support plugs 50 may be of equal length, which is beneficial.

It should be noted that the cross-section of the outer enclosure 28 is not limited to be square but may be varied according to e.g. constructional reasons, as long as the enclosure comprises the planar face wall 36. According to an embodiment of the invention, the outer enclosure 28 is of polygonal cross-section. According to another embodiment of the invention, the outer enclosure 28 is of hexagonal cross-section. According to a yet another embodiment of the invention, the outer enclosure 28 is of octagonal cross-section.

Figure 3 illustrates the fastening bushings 45 more in detail. The fastening bushing 45 comprises an inner thread 45' for receiving fastening means such as a bolt or alike for attaching the connecting part 18 to the planar face wall 36. Furthermore, there is a gap in the intermediate space 30 between the fastening bushing 45 and the fuel gas manifold 20. Since the connecting parts 18 are fastened to middle area of the face wall 36 there is a pair of fastening bushings 45 arranged at the same longitudinal location to extend from the wall 36 to the intermediate space 30. The fastening bushings 45 are positioned at the location of a hole provided to the face wall 36 and secured thereto by gas tight welding.

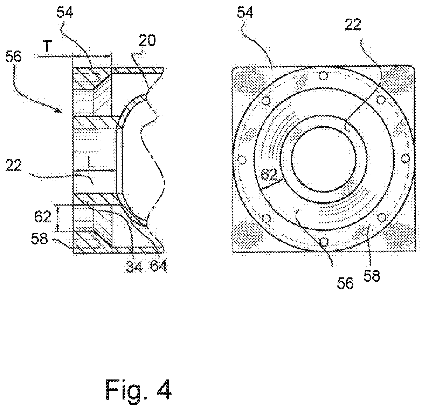

Turning back to the figure 2, the outer enclosure 28 comprises a flange member 54 at its longitudinal end. In the figure 2 there are flange members 54 at both ends of the outer enclosure 28. The flange member 54 is attached at its edges to the end of the first and the second singular plate in gas tight manner, preferably by welding. Thus, the flange member is also rectangular to meet the cross-section of the outer enclosure 28. The flange member is shown in more precisely manner in the figure 4. The flange member 54 is provided with an opening 56, more specifically with one opening and a flat sealing and attaching surface 58 around the opening 56. In the assembly 14 the end part 34 of the fuel gas manifold 20 is arranged in connection with the opening 56 in the flange member 54 such that a gap 62 is provided between the end part 34 and the flange member 54 in radial direction. The end part of the fuel gas manifold is arranged to extend into the opening in the flange member 54. The gap is an annular space leading through the flange member 54 into the intermediate space 30. This way the flange member 54 surrounds a portion of the end part 34 of the of the gas manifold. The end part has a substantially constant circular cross-section i.e. diameter over a predetermined length L from its end. The length L of the end part 34 is advantageously greater than the thickness T of the flange member 54. The diameter of the end portion 34 is smaller than the diameter of the opening 56 in the flange member. The diameter of the end portion 34 is also smaller that the diameter of the gas manifold 20 in the area between the end parts 34.

This facilitates the access to the intermediate gas space 30 arranged between the fuel gas manifold 20 and the outer enclosure 28. The fuel gas manifold 20 comprises a converging section 64 which converges towards the end part 34 and to which the end part 34 is joined Thus the end part 34 and the cylindrical middle part of the gas manifold 20 are coupled with each other by a longitudinally converging section 64. This facilitates more the access to the intermediate gas space 30 arranged between the fuel gas manifold 20 and the outer enclosure 28.

The end part 34 of the fuel gas manifold 20 is advantageously arranged coaxially with the opening in the flange member. As is shown in the figures the end part 34 is arranged to extend to flush with a face plane of the flange member's 54 end surface 58. Advantageously the end face of the flange member 54 together with the end part 34 is machined after installation of the gas manifold 20 into the enclosure 28. In general, the opening 56 in the flange member, the end part 34 of the manifold 20 and the converging section 64 are formed so that a suitable gap is provided via which any residues resulted from machining the face of the flange member and the end part 34 during the manufacturing process, may be removed from the intermediate space 30. By means of the flange member 54 the fuel gas manifold assembly 14 can by coupled to appropriate double walled supply ducts 55 to connect for example to a fuel supply system and leakage gas handling system (not shown). The face surfaces of the end part 34 and the flange member 54 are sealed with an o-ring to a flange of the supply duct 55.

The plugs 50 are formed of a longitudinal cylindrical wall 53 and a flat bottom plate 52 wherein the longitudinal cylindrical wall 53 is welded to the opening of the outer enclosure 28. The flat plate 52 is arranged at one longitudinal end of the plug, and when assembled, the flat plate is arranged to be in contact with the inner fuel gas manifold 20 and secured by welding to the manifold 20.

The support plugs 50 are fastened to the inner fuel gas manifold by a plug weld fastening wherein the plug weld fastening provides gas-tight fastening between the outer enclosure and the inner flue gas manifold.

The support parts are welded by laser welding from outside to the outer enclosure so as to form a gas-tight fastening wherein leakage from the intermediate space to an outside of the outer enclosure is prevented.

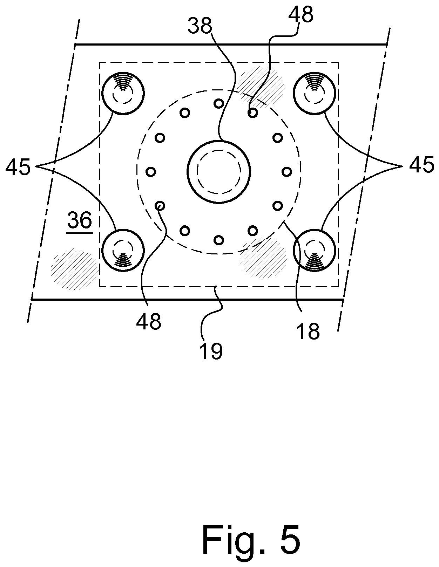

The area of the connecting part 18 in the planar face wall 36 is shown as magnified view in the figure 5. The auxiliary openings 48 are arranged evenly spaced manner around the main opening. There are four fastening bushings 45 arranged as corners of a rectangular shape and as illustrated a flange part of the connecting part 18 is of rectangular shape (as depicted by the dashed rectangular line 19).

The fuel gas assembly 14 shown in the figures is manufactured so that a gas tight inner fuel gas manifold 20 is provided which define a longitudinal passage for fuel gas. The fuel gas manifold is formed of a middle section having a first diameter, converging section 64 at both ends of the middle section and end parts 34 connected to the both ends of the converging sections 64. A fuel gas inlet is provided at least one end of the fuel gas manifold 20 and a number of fuel gas outlets 24 along the longitudinal passage of the fuel gas manifold. Further a longitudinal outer enclosure 28 is provided to enclose the fuel gas manifold 20 by arranging an enclosure to surround and extend longitudinally with fuel gas manifold 20, wherein dimensions of the outer enclosure 28 are chosen so that there is an intermediate gas space between the fuel gas manifold 20 and the outer enclosure 28. Additionally the outer enclosure 28 is provide with a planar face wall 36 and a number of main openings 38 to the face wall 36 which are arranged at the locations of the fuel gas outlets of the manifold 20 and coupled with each other in gas tight manner. At least one auxiliary opening 28 is provided next to each one of the main openings 38 in the planar wall arranged to communicate with the intermediate gas space 30.

The outer enclosure 28 is formed from plate-like walls 28.1,28.2,28.3,26 so that the enclosure 28 has a rectangular cross-section and the end portions of the inner manifold 20 is provided with converging section 64, which converging section 64 converges towards ends of the inner manifold 20 so providing, together with the form of the outer enclosure and the end parts an access to the intermediate space from both ends. Additionally a flange member 54 is welded to both ends of the outer enclosure.

According to an embodiment of the invention, method of manufacturing a fuel gas assembly comprises steps of forming the outer channel of two separate pieces: one flat bottom portion and one U-shaped top portion, and wherein the method comprises a step of laser welding the flat portion and the U-shaped top portion together.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible. It should be also noted that all welding symbol are omitted for clarity reasons, even if all the connections which are intended to be permanent i.e. not releasable are gas tightly welded.

## Claims

1. A fuel gas manifold assembly (14) configured to be used in an internal combustion piston engine, the fuel gas manifold assembly (14) comprising a gas tight fuel gas manifold (20) defining a longitudinal passage for fuel gas, a fuel gas inlet and a number of fuel gas outlets (24) along the longitudinal passage, the fuel gas manifold assembly (14) further comprising an outer enclosure (28) surrounding the fuel gas manifold (20) so as to provide a gas tight cover for the fuel gas manifold (20), and wherein an intermediate gas space is arranged between the inner fuel gas manifold (20) and the outer enclosure (28), **characterized in that** the outer enclosure (28) is provided with a planar face wall (36) extending from one end of the enclosure (28) to the second end of the enclosure and that the planar face wall (36) is provided with a number of main openings (38) along its length, arranged to communicate with the fuel gas outlets of the manifold (20) in the enclosure and that there is arranged at least one auxiliary opening (48) next to each one of the main openings in the planar wall communicating with the intermediate gas space (30).

2. A fuel gas manifold assembly (14) according to claim 1, **characterized in that** the planar face wall (36) of the outer enclosure (28) is formed of a first singular plate member and the three other walls (28.1, 28.2, 28.3) of the outer enclosure (28) are formed of a second singular plate member provided with two folds (28') and that the middle wall (28.2) of the outer enclosure (28) between the folds is arranged on the opposite side to the first singular plate member.

3. A fuel gas manifold assembly (14) according to claim 1, **characterized in that** the outer enclosure (28) has a rectangular cross-section formed of planar walls, and that the inner fuel gas manifold (20) has generally circular cross-section.

4. A fuel gas manifold assembly (14) according to claim 1, **characterized in that** the fuel gas manifold (20) has a circular cross section and its diameter is greater at its middle region than at its ends.

5. A fuel gas manifold assembly (14) according to claim 1 or 4, **characterized in that** the fuel gas manifold (20) comprises end parts having a constant circular cross-section over a predetermined length and that the diameter of the end parts (34) is smaller than the diameter of the gas manifold (20) between the end parts.

6. A fuel gas manifold assembly (14) according to claim 1, **characterized in that** the outer enclosure (28) is provided with a flange member (54) where an opening is provided and that the end part (34) of the fuel gas manifold (20) is arranged coaxially with the opening in the flange member.

7. A fuel gas manifold assembly (14) according to claim 1, **characterized in that** the opening in the flange member of the outer enclosure (28) has greater diameter than the end part.

8. A fuel gas manifold assembly (14) according to claim 1, **characterized in that** the end part is arranged to extend to flush with a face plane of the flange member outer surface of the flange member of the outer enclosure (28).

9. A fuel gas manifold assembly (14) according to claim 1, **characterized in that** the fuel gas manifold (20) comprises a converging section (64), which converging section (64) converges towards end parts thereof.

10. A fuel gas manifold assembly (14) according to claim 1, **characterized in that** the outer enclosure (28) is provided with number of through holes, in which through hole a plug is provided, extending into the intermediate gas space and against the inner fuel gas manifold (20) so as to support the fuel gas manifold (20) in the outer enclosure (28).

11. A fuel gas manifold assembly (14) according to claim 1, **characterized in that** the main opening in the planar face wall (36) and the fuel gas outlet in the fuel gas manifold (20) are gas tightly secured with each other at their rim by welding.

12. A fuel gas manifold assembly (14) according to according to anyone of claims 1-7, **characterized in that** the outer enclosure (28) comprises flange members at its both ends and that the flange member surrounds a portion of the end parts of the of the gas manifold (20).

13. An internal combustion piston engine comprising a fuel gas manifold assembly (14) according to anyone of claims 1-12.

14. A method of manufacturing a fuel gas assembly configured to be used in an internal combustion piston engine, the method comprising the steps of providing a gas tight inner fuel gas manifold (20) defining a longitudinal passage for fuel gas, providing a fuel gas inlet and a number of fuel gas outlets (24) along the longitudinal passage of the fuel gas manifold (20), providing a longitudinal outer enclosure (28) for the fuel gas manifold (20) by arranging an enclosure to surround and extend longitudinally with fuel gas manifold (20), wherein dimensions of the outer enclosure (28) are chosen so that there is an intermediate gas space between the fuel gas manifold (20) and the outer enclosure (28), **characterized by** the steps of providing the outer enclosure (28) with a planar face wall (36) extending from one end of the enclosure (28) to the second end of the enclosure and providing a number of main openings (38) to the face wall (36) along its length arranged at to communicate with the fuel gas outlets of the manifold (20) in the enclosure and arranging at least one auxiliary opening (48) next to each one of the main openings in the planar wall communicating with the intermediate gas space (30).

15. A method of manufacturing a fuel gas assembly according to claim 14, **characterized by** forming the outer enclosure (28) from plate-like walls so that the enclosure (28) has a rectangular cross-section and providing the end portions of the inner manifold (20) with converging channel section (64), which converging channel section (64) converges towards ends of the inner manifold (20).

16. A method of manufacturing a fuel gas assembly according to anyone of claims 14-15, **characterized by** a step of welding a flange member (54) to both ends of the outer channel.

17. A method of manufacturing a fuel gas assembly according to claim 14, **characterized by** forming the planar face wall (36) of the outer enclosure (28) of a first singular plate member and forming the three other walls (28.1, 28.2, 28.3) of the outer enclosure (28) of a second singular plate member provided with two folds (28') and that the middle wall (28.2) of the outer enclosure (28) between the folds is arranged on the opposite side to the first singular plate member.

18. A method of manufacturing a fuel gas assembly according to claim 17, **characterized in that** the first singular plate member is provided with required number of the main openings (38) along its length and at least one auxiliary opening (48) next to each one of the main opening.

## Patentansprüche

1. Brenngasverteilerbaugruppe (14), die zur Verwendung in einer Kolbenbrennkraftmaschine konfiguriert ist, wobei die Brenngasverteilerbaugruppe (14) einen gasdichten Brenngasverteiler (20), der einen längs verlaufenden Durchgang für Brenngas definiert, einen Brenngaseinlass und eine Anzahl Brenngasauslässe (24) entlang des längs verlaufenden Durchgangs umfasst, wobei die Brenngasverteilerbaugruppe (14) ferner ein Außengehäuse (28) umfasst, das den Brenngasverteiler (20) so umgibt, dass es eine gasdichte Hülle dafür bildet, und ein Gaszwischenraum zwischen dem innenliegenden Brenngasverteiler (20) und dem Außengehäuse (28) angeordnet ist, **dadurch gekennzeichnet, dass** das Außengehäuse (28) mit einer ebenen Stirnwand (36) versehen ist, die sich von einem Ende des Gehäuses (28) bis zum anderen Ende des Gehäuses erstreckt, und die ebene Stirnwand (36) entlang ihrer Länge mit einer Anzahl Hauptöffnungen (38) versehen ist, die so angeordnet sind, dass sie mit den Brenngasauslässen des Verteilers (20) in dem Gehäuse verbunden sind, und neben jeder der Hauptöffnungen in der ebenen Wand mindestens eine Nebenöffnung (48) angeordnet ist, die mit dem Gaszwischenraum (30) verbunden ist.

2. Brenngasverteilerbaugruppe (14) nach Anspruch 1, **dadurch gekennzeichnet, dass** die ebene Stirnwand (36) des Außengehäuses (28) aus einem ersten einzelnen Plattenelement gebildet ist und die drei anderen Wände (28.1, 28.2, 28.3) des Außengehäuses (28) aus einem zweiten einzelnen Plattenelement gebildet sind, das mit zwei Krümmungen (28') versehen ist, und die zwischen den Krümmungen liegende mittlere Wand (28.2) des Außengehäuses (28) auf der dem ersten einzelnen Plattenelement gegenüberliegenden Seite angeordnet ist.

3. Brenngasverteilerbaugruppe (14) nach Anspruch 1, **dadurch gekennzeichnet, dass** das Außengehäuse (28) einen rechteckigen Querschnitt aufweist, der von ebenen Wänden gebildet wird, und der innenliegende Brenngasverteiler (20) einen allgemein runden Querschnitt aufweist.

4. Brenngasverteilerbaugruppe (14) nach Anspruch 1, **dadurch gekennzeichnet, dass** der Brenngasverteiler (20) einen runden Querschnitt aufweist und sein Durchmesser in seinem mittleren Bereich größer ist als an seinen Enden.

5. Brenngasverteilerbaugruppe (14) nach Anspruch 1 oder 4, **dadurch gekennzeichnet, dass** der Brenngasverteiler (20) Endstücke von über eine vorgegebene Länge hinweg konstantem, rundem Querschnitt umfasst und der Durchmesser der Endstücke (34) geringer ist als der des Gasverteilers (20) zwischen den Endstücken.

6. Brenngasverteilerbaugruppe (14) nach Anspruch 1, **dadurch gekennzeichnet, dass** das Außengehäuse (28) mit einem Flanschelement (54) versehen ist, an dem eine Öffnung vorgesehen ist, und das Endstück (34) des Brenngasverteilers (20) koaxial mit der Öffnung in dem Flanschelement angeordnet ist.

7. Brenngasverteilerbaugruppe (14) nach Anspruch 1, **dadurch gekennzeichnet, dass** die Öffnung in dem Flanschelement des Außengehäuses (28) einen größeren Durchmesser aufweist als das Endstück.

8. Brenngasverteilerbaugruppe (14) nach Anspruch 1, **dadurch gekennzeichnet, dass** das Endstück so angeordnet ist, dass es sich bündig mit einer Stirnfläche der Flanschelementaußenfläche des Flanschelements des Außengehäuses (28) erstreckt.

9. Brenngasverteilerbaugruppe (14) nach Anspruch 1, **dadurch gekennzeichnet, dass** der Brenngasverteiler (20) einen konvergierenden Abschnitt (64) umfasst, der zu Endstücken davon hin konvergiert.

10. Brenngasverteilerbaugruppe (14) nach Anspruch 1, **dadurch gekennzeichnet, dass** das Außengehäuse (28) mit einer Anzahl Durchgangslöcher versehen ist, in denen ein Verschlussstück vorgesehen ist, das sich so bis an den innenliegenden Brenngasverteiler (20) in den Gaszwischenraum hinein erstreckt, dass es den Brenngasverteiler (20) in dem Außengehäuse (28) hält.

11. Brenngasverteilerbaugruppe (14) nach Anspruch 1, **dadurch gekennzeichnet, dass** die Hauptöffnung in der ebenen Stirnwand (36) und der Brenngasauslass in dem Brenngasverteiler (20) an ihrem Rand durch Schweißen gasdicht aneinander befestigt sind.

12. Brenngasverteilerbaugruppe (14) nach einem der Ansprüche 1 bis 7, **dadurch gekennzeichnet, dass** das Außengehäuse (28) an seinen beiden Enden Flanschelemente umfasst und das Flanschelement einen Teil der Endstücke des Gasverteilers (20) umgibt.

13. Kolbenbrennkraftmaschine mit einer Brenngasverteilerbaugruppe (14) nach einem der Ansprüche 1 bis 12.

14. Verfahren zum Fertigen einer Brenngasbaugruppe, die zur Verwendung in einer Kolbenbrennkraftmaschine konfiguriert ist, wobei das Verfahren folgende Schritte umfasst: Bereitstellen eines gasdichten, innenliegenden Brenngasverteilers (20), der einen längs verlaufenden Durchgang für Brenngas definiert, Bereitstellen eines Brenngaseinlasses und einer Anzahl Brenngasauslässe (24) entlang des längs verlaufenden Durchgangs des Brenngasverteilers (20), Bereitstellen eines längs verlaufenden Außengehäuses (28) für den Brenngasverteiler (20) durch derartiges Anordnen eines Gehäuses, dass es den Brenngasverteiler (20) umgibt und sich längs dazu erstreckt, wobei Maße für das Außengehäuse (28) so gewählt werden, dass sich zwischen dem Brenngasverteiler (20) und dem Außengehäuse (28) ein Gaszwischenraum befindet, **gekennzeichnet durch** das Versehen des Außengehäuses (28) mit einer ebenen Stirnwand (36), die sich von einem Ende des Gehäuses (28) bis zum anderen Ende des Gehäuses erstreckt, und das Versehen der ebenen Stirnwand (36) entlang ihrer Länge mit einer Anzahl Hauptöffnungen (38), die so angeordnet sind, dass sie mit den Brenngasauslässen des Verteilers (20) in dem Gehäuse verbunden sind, und das Anordnen mindestens einer Nebenöffnung (48), die mit dem Gaszwischenraum (30) verbunden ist, neben jeder der Hauptöffnungen in der ebenen Wand.

15. Verfahren zum Fertigen einer Brenngasbaugruppe nach Anspruch 14, **gekennzeichnet durch** das Bilden des Außengehäuses (28) aus plattenartigen Wänden, so dass das Gehäuse (28) einen rechteckigen Querschnitt aufweist, und das Versehen der Endteile des innenliegenden Verteilers (20) mit dem konvergierenden Kanalabschnitt (64), der zu Enden des innenliegenden Verteilers (20) hin konvergiert.

16. Verfahren zum Fertigen einer Brenngasbaugruppe nach einem der Ansprüche 14 und 15, **gekennzeichnet durch** das Anschweißen eines Flanschelements (54) an beide Enden des Außenkanals.

17. Verfahren zum Fertigen einer Brenngasbaugruppe nach Anspruch 14, **gekennzeichnet durch** das Bilden der ebenen Stirnwand (36) des Außengehäuses (28) aus einem ersten einzelnen Plattenelement und das Bilden der drei anderen Wände (28.1, 28.2, 28.3) des Außengehäuses (28) aus einem zweiten einzelnen Plattenelement, das mit zwei Krümmungen (28') versehen wird, und **dadurch, dass** die zwischen den Krümmungen liegende mittlere Wand (28.2) des Außengehäuses (28) auf der dem ersten einzelnen Plattenelement gegenüberliegenden Seite angeordnet wird.

18. Verfahren zum Fertigen einer Brenngasbaugruppe nach Anspruch 17, **dadurch gekennzeichnet, dass** das erste einzelne Plattenelement entlang seiner Länge mit der erforderlichen Anzahl Hauptöffnungen (38) und mit mindestens einer Nebenöffnung (48) neben jeder der Hauptöffnungen versehen wird.

## Revendications

1. Ensemble collecteur de gaz combustible (14) configuré pour être utilisé dans un moteur à combustion interne, l'ensemble collecteur de gaz combustible (14) comprenant un collecteur de gaz combustible (20) étanche aux gaz définissant un passage longitudinal pour du gaz combustible, une entrée de gaz combustible et un nombre de sorties de gaz combustible (24) le long du passage longitudinal, l'ensemble collecteur de gaz combustible (14) comprenant en outre une enceinte extérieure (28) entourant le collecteur de gaz combustible (20) de façon à fournir un recouvrement étanche aux gaz pour le collecteur de gaz combustible (20), et dans lequel un espace de gaz intermédiaire est agencé entre le collecteur de gaz combustible interne (20) et l'enceinte extérieure (28), **caractérisé en ce que** l'enceinte extérieure (28) est dotée d'une paroi planaire (36) s'étendant d'une extrémité de l'enceinte (28) vers la seconde extrémité de l'enceinte et que la paroi planaire (36) est dotée d'un nombre d'ouvertures principales (38) sur sa longueur, agencées pour communiquer avec les sorties de gaz combustible du collecteur (20) dans l'enceinte et qu'au moins une ouverture auxiliaire (48) est agencée proche de chacune des ouvertures principales dans la paroi communiquant avec l'espace de gaz intermédiaire (30).

2. Ensemble collecteur de gaz combustible (14) selon la revendication 1, **caractérisé en ce que** la paroi planaire (36) de l'enceinte extérieure (28) est formée d'un premier membre de plaque unique et les trois autres parois (28.1, 28.2, 28.3) de l'enceinte extérieure (28) sont formées d'un second membre de plaque unique doté de deux plis (28') et que la paroi centrale (28.2) de l'enceinte extérieure (28) entre les plis est agencée sur le côté opposé au premier membre de plaque unique.

3. Ensemble collecteur de gaz combustible (14) selon la revendication 1, **caractérisé en ce que** l'enceinte extérieure (28) a une section rectangulaire formée de parois planaires et que le collecteur de gaz combustible interne (20) a une section généralement circulaire.

4. Ensemble collecteur de gaz combustible (14) selon la revendication 1, **caractérisé en ce que** le collecteur de gaz combustible (20) a une section circulaire et son diamètre est plus grand en sa région centrale qu'en ses extrémités.

5. Ensemble collecteur de gaz combustible (14) selon la revendication 1 ou 4, **caractérisé en ce que** le collecteur de gaz combustible (20) comprend des parties d'extrémité ayant une section circulaire constante sur une longueur prédéterminée et que le diamètre des parties d'extrémité (34) est plus petit que le diamètre du collecteur de gaz (20) entre les parties d'extrémité.

6. Ensemble collecteur de gaz combustible (14) selon la revendication 1, **caractérisé en ce que** l'enceinte extérieure (28) est dotée d'un membre de bride (54) où une ouverture est prévue et que la partie d'extrémité (34) du collecteur de gaz combustible (20) est agencée coaxialement avec l'ouverture dans le membre de bride.

7. Ensemble collecteur de gaz combustible (14) selon la revendication 1, **caractérisé en ce que** l'ouverture dans le membre de bride de l'enceinte extérieure (28) a un diamètre plus grand que la partie d'extrémité.

8. Ensemble collecteur de gaz combustible (14) selon la revendication 1, **caractérisé en ce que** la partie d'extrémité est agencée pour s'étendre pour être adjacente à un plan de face de la surface extérieure du membre de bride de l'enceinte extérieure (28).

9. Ensemble collecteur de gaz combustible (14) selon la revendication 1, **caractérisé en ce que** le collecteur de gaz combustible (20) comprend une section convergente (64), laquelle section convergente (64) converge en direction de parties d'extrémité de celui-ci.

10. Ensemble collecteur de gaz combustible (14) selon la revendication 1, **caractérisé en ce que** l'enceinte extérieure (28) est dotée d'un nombre de trous traversants, dans lesquels trous traversants un bouchon est prévu, s'étendant jusque dans l'espace de gaz intermédiaire et contre le collecteur de gaz combustible interne (20) de façon à supporter le collecteur de gaz combustible (20) dans l'enceinte extérieure (28).

11. Ensemble collecteur de gaz combustible (14) selon la revendication 1, **caractérisé en ce que** l'ouverture principale dans la paroi planaire (36) et la sortie de gaz combustible dans le collecteur de gaz combustible (20) sont fixées l'une à l'autre en étanchéité aux gaz par soudage sur leur bord.

12. Ensemble collecteur de gaz combustible (14) selon l'une quelconque des revendications 1 - 7, **caractérisé en ce que** l'enceinte extérieure (28) comprend des membres de bride à ses deux extrémités et que le membre de bride entoure une portion des parties d'extrémité du collecteur de gaz (20).

13. Moteur à pistons à combustion interne comprenant un ensemble collecteur de gaz combustible (14) selon l'une quelconque des revendications 1 -12.

14. Procédé de fabrication d'un ensemble de gaz combustible configuré pour être utilisé dans un moteur à pistons à combustion interne, le procédé comprenant les étapes de fournir un collecteur de gaz combustible (20) étanche aux gaz définissant un passage longitudinal pour du gaz combustible, fournissant une entrée de gaz combustible et un nombre de sorties de gaz combustible (24) le long du passage longitudinal du collecteur de gaz combustible (20), fournissant une enceinte extérieure (28) longitudinale pour le collecteur de gaz combustible (20) par l'agencement d'une enceinte pour entourer et s'étendre longitudinalement avec le collecteur de gaz combustible (20), dans lequel les dimensions de l'enceinte extérieure (28) sont choisies de façon à fournir un espace de gaz intermédiaire entre le collecteur de gaz combustible (20) et l'enceinte extérieure (28), **caractérisé par** les étapes de doter l'enceinte extérieure (28) d'une paroi planaire (36) s'étendant d'une extrémité de l'enceinte (28) vers la seconde extrémité de l'enceinte et de doter la paroi planaire (36) d'un nombre d'ouvertures principales (38) sur sa longueur, agencées pour communiquer avec les sorties de gaz combustible du collecteur (20) dans l'enceinte et d'agencer au moins une ouverture auxiliaire (48) proche de chacune des ouvertures principales dans la paroi planaire communiquant avec l'espace de gaz intermédiaire (30).

15. Procédé de fabrication d'un ensemble de gaz combustible selon la revendication 14, **caractérisé par** la formation de l'enceinte extérieure (28) à partir de parois de type plaques de façon à ce que l'enceinte (28) ait une section rectangulaire et en dotant les parties d'extrémité du collecteur interne (20) d'une section de canal convergente (64), laquelle section de canal convergente (64) converge en direction d'extrémités du collecteur interne (20).

16. Procédé de fabrication d'un ensemble de gaz combustible selon l'une quelconque des revendications 14-15, **caractérisé par** un procédé de soudage d'un membre de bride (54) sur les deux extrémités du canal extérieur.

17. Procédé de fabrication d'un ensemble de gaz combustible selon la revendication 14, **caractérisé par** la formation de la paroi planaire (36) de l'enceinte extérieure (28) avec un premier membre de plaque unique et la formation des trois autres parois (28.1, 28.2, 28.3) de l'enceinte extérieure (28) avec un second membre de plaque unique doté de deux plis (28') et que la paroi centrale (28.2) de l'enceinte extérieure (28) entre le plis est agencée sur le côté opposé au premier membre de plaque unique.

18. Procédé de fabrication d'un ensemble de gaz combustible selon la revendication 17, **caractérisé en ce que** le premier membre de plaque unique est doté d'un nombre requis d'ouvertures principales (38) sur sa longueur et d'au moins une ouverture auxiliaire (48) proche de chacune des ouvertures principales.
